Europäisches Patentamt

(19) European Patent Office

Office européen des brevets

· (11) Publication number: **0 139 318**
**B1**

(12) **EUROPEAN PATENT SPECIFICATION**

(45) Date of publication of patent specification: 27.07.88

(21) Application number: 84201228.8

(22) Date of filing: 27.08.84

(51) Int. Cl.⁴: **B 27 K 3/00,** B 27 K 3/02, B 65 D 59/02

(54) **An ampoule containing a wood preservative composition fixed to a closure cap for closing a recess in wood for receiving said ampoule and a suitable closure cap of this type.**

(30) Priority: 26.08.83 NL 8302998

(43) Date of publication of application: 02.05.85 Bulletin 85/18

(45) Publication of the grant of the patent: 27.07.88 Bulletin 88/30

(84) Designated Contracting States: AT BE CH DE FR GB IT LI LU NL SE

(56) References cited: BE-A- 449 558 BE-A- 473 289

CHEMICAL ABSTRACTS, vol. 94, no. 8, 23rd February 1981, page 95, no. 49039z, Columbus Ohio (USA)

(73) Proprietor: **WOODCAP B.V. Geyserstraat 3 NL-5753 RP Deurne (NL)**

(72) Inventor: **Blom, Cornelis Willem Troubadourshof 1 NL-2171 TG Sassenheim (NL)**

(74) Representative: **van der Veken, Johannes Adriaan et al EXTERPATENT B.V. P.O. Box 90649 NL-2509 LP 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to an ampoule containing a wood-preservative composition, said ampoule being connected to closure means for a recess in wood such that when said ampoule is inserted in said recess, said ampoule will break when striking said closure means for closing said recess, whereby said wood-preservative composition is released.

An ampoule of this type is known from BE—A—449558 in which an ampoule is disclosed, connected to closure means, which ampoule will break upon striking said closure means for closing a recess in which said ampoule has been inserted. The closure means in this Belgian application are made of hard wood or metal.

This known ampoule has a disadvantage that leakage may occur due to either lack of closure of the recess or due to leaks formed upon later warping of the wood element to be protected or treated.

Abovenoted disadvantage is eliminated in an ampoule according to the invention which is characterized in that the closure means of an ampoule are constituted by a closure cap made of plastic material.

In an ampoule according to the present invention the closure means are formed by a closure cap of plastic material which will adapt itself, by deformation, to the form and condition of the walls of a recess into which the ampoule is inserted when said closure means are struck for simultaneous breaking of said ampoule and closing said recess.

By said adaptation of the closure cap very good sealing is obtained, such that escape of wood-preservative composition is prevented. At the same time a closure cap made of plastic material will allow for injection of additional preservative composition into the closed cavity via the closure cap. With respect to the ampoule according to the invention BE—A—473 289 is mentioned; said publication desribes an ampoule of breakable material, said ampoule being enveloped by a flexible material and connected to a stopper of the same diameter as the outside diameter of the ampoule.

Such an ampoule, when used for the purpose of treating wood, would imply the risk of premature breaking upon inserting in a recess and/or leakage of the contents of said ampoule due to not proper closing the recess.

By using this combination of interconnected ampoule and closure cap, one can also be certain that an ampoule fitted into a recess of appropriate predetermined depth will break or open when the closure cap is knocked into the recess opening, and in addition the recess will be excellently sealed. In this respect it should be noted that the assembly permits the use of rather short ampoules as these ampoules are always excellently broken in comparison with the use of a loose closure cap and loose ampoule.

According to one very advantageous embodiment, the ampoule is clampingly received in a bore in the closure cap, so that the ampoule and closure cap assembly can readily be manufactured and a good connection between the ampoule and the closure cap is guaranteed even during rough handling.

Preferably, the bore in the closure cap is of a cylindrical shape. In a particularly advantageous embodiment the closure cap is connected to a bottom ampoule support, the ampoule co-operating with the closure cap and the ampoule support.

According to one very advantageous embodiment, the bore in the closure cap tapers conically into the direction of the inside of the cap so that, on the one hand, it is a simple matter to fit the ampoule into the closure cap bore while, on the other hand, very intimate clamping can be obtained between the entry side of the bore to the closure cap and, on the other hand, the ampoule disposed therein.

An ampoule according to the invention, containing a wood-preservative composition, secured in a plastic closure cap, also offers the user an absolutely reliable protection against contact with the wood-preservative composition in the ampoule. If a loose ampoule and a loose closure cap are used, in fact, there is no guarantee that harmful substances of the composition in the ampoule will not escape and result in undesirable effects on persons using such ampoules during the fitting and breaking of the ampoule in the recess.

Advantageously, the closure cap at least partially conically tapers at its outer side in the direction of the ampoule, so that a recess formed in wood to be treated during the fitting of the closure cap to the recess is very appropriately sealed off.

In a very advantageous embodiment the closure cap is connected with the ampoule by means of an adhesive, preferably one or more projecting lips connected to the ampoule by means of an adhesive connection.

According to one very advantageous embodiment, the closure cap may contain a sensor so that it is possible to measure certain conditions in the recess formed in the wood and containing the ampoule. These may, for example, be the moisture content, the amount of remaining wood-preservative composition and the like.

In this way it is possible, for example, after the ampoule has been fitted, to measure at regular intervals the extent to which substances of the wood-preservative composition are still present or active.

The invention will now be explained with reference to an embodiment with respect to the accompanying drawings wherein:

Fig. 1 is a section through an ampoule and closure cap assembly according to the invention.

Fig. 2 is a section of a modified assembly according to Fig. 1.

Fig. 3 is a section of a closure cap with part of an ampoule and a sensor contained in the closure cap accommodated in a recess in a wooden part of a window frame.

Fig. 4 is an embodiment in which the ampoule closure cap is provided with conically extending recesses disposed above each other.

Fig. 5 is a section to a reduced scale of the closure cap shown in Fig. 4.

The drawings show a glass ampoule 1 containing a wood-preservative composition 2. This composition consists, for example, of 85% tetralin as a water-expelling organic solvent, 2% of an organo-tin compound and 13% of a paraffin wax as water-repellent agent.

The ampoule is fixed in a closure cap 3 of plastics; a very suitable plastic is, for example, nylon or polyethylene, although other plastics are also very suitable for such a closure cap. A nylon closure cap is preferred.

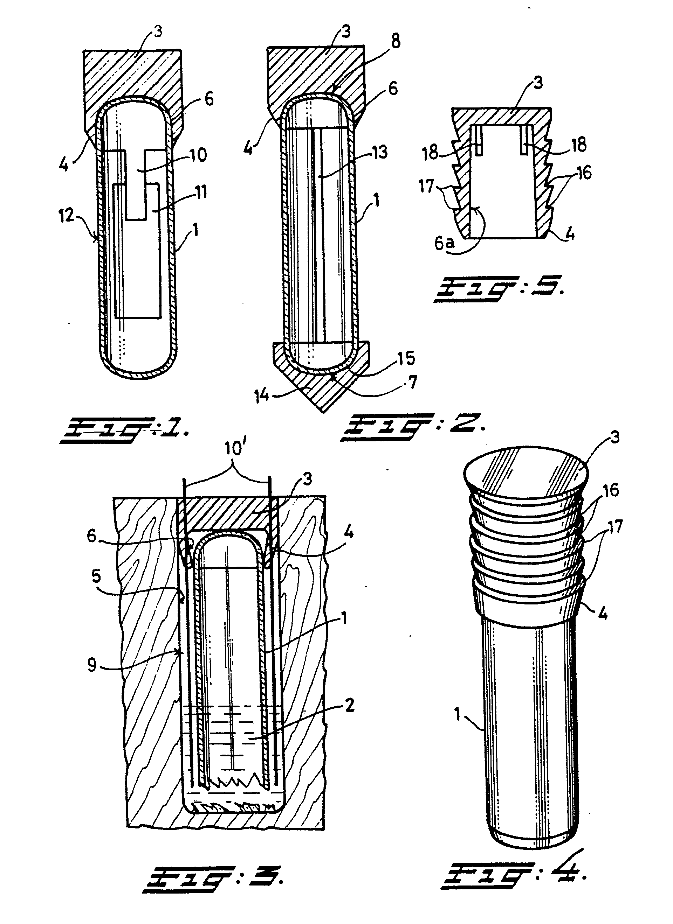

In Figure 1 the upper part of the ampoule 1 is accommodated in a cylindrical bore 6 in a nylon closure cap 3, the shape of the bottom of the bore 6 being adapted to the engaging part of the ampoule.

The closure cap 3 comprises two opposite lips 10 glued to an adhesive label 11 glued to the surface 12 of the ampoule 1.

An assembly of this kind is very easy to manufacture.

Of course the ampoule 1 may also be fixed to the closure cap 3 by an adhesive layer between the bottom of the cylindrical bore and the opposite part of the ampoule.

Figure 2 shows an embodiment in which the nylon closure cap 3 is connected by means of two flexible nylon strips 13 to an ampoule support 14 provided with a recess 15 to receive the bottom of the ampoule 1.

In this case the ampoule 1 adjoins the bottom 8 of the cylindrical bore 6 and the bottom 7 of the ampoule support 14.

Since the bottom 8 of the bore 6 adjoins one end of the ampoule 1 one can, after a recess 9 has been formed at the correct depth in the wood (Fig. 3) be certain that the ampoule will break at a certain time when the closure cap is driven from the top into the recess in the wood, so that the liquid composition will be released from the ampoule.

The lower part of the outer side of the closure cap 3 tapers at least conically in the direction of the ampoule so that the penetration of such a closure cap into a cylindrical recess 9 in wood is easy and also a very good co-operation is obtained between the outer side 4 of the closure cap 3 and the inner wall 5 of the recess 9 in the wood, since the closure cap will be readily deformed when same is driven into the recess.

It will be evident that very good results are obtained particularly with an assembly as shown in Figure 2.

Figure 3 shows a special embodiment in which a sensor 10′ is accommodated in the plastic closure cap 3 to measure the amount of composition 2 in the recess 9 in the wood after the fitting of the ampoule 1 and closing off this recess by the closure cap, thereby simultaneously opening the ampoule 1.

For a very good maintenance programme it may also be desirable to measure apart from the composition the moisture content in the wood recess 9 at certain times, since an excessive moisture content indicates that new wood-preservative composition must be introduced into the recess 9 in the wood.

In a preferred embodiment an additional amount of preservative composition may be introduced by piercing the cap 3 by a syringe needle and injecting the liquid composition through the cap 3.

It was hitherto impossible to measure such conditions easily.

In the embodiment according to Fig. 3 the closure cap 3 is provided with a bore 6 widening conically from the bottom of the closure cap.

Figure 4 shows another embodiment of the invention in elevation, in which the closure cap is provided with, preferably, conically extending recesses 16 disposed above each other. These recesses give the closure cap 3 good deformability.

The annular ribs 17 formed by the annular recesses 16 are operative as clamping and sealing promoting means.

Figure 5 is a reduced-scale cross-section of the closure cap of the invention as illustrated in Fig 4. showing a bore 6a provided with ampoule retaining means, e.g. in the form of lips 18. The bore 6a in this case extends substantially conically in the direction of the top of the closure cap 3.

## Claims

1. An ampoule containing a wood-preservative composition, said ampoule being connected to closure means for a recess in wood such that when said ampoule is inserted in said recess, said ampoule will break when striking said closure means for closing said recess, whereby said wood-preservative composition is released characterized in that said closure means are constituted by a closure cap (3) made of plastic material.

2. An ampoule according to claim 1, characterized in that the upper part of the ampoule (1) is clampingly received in a bore (6) in the closure cap (3).

3. An ampoule according to claims 1 or 2, characterized in that the upper part of the ampoule (1) is received in a bore (6) in the closure cap (3) of cylindrical form or widening conically into the direction of the inside of the closure cap (3).

4. An ampoule according to claims 1 to 3 characterized in that the closure cap (3) is connected with the ampoule by means of an adhesive, preferably one or more projecting lips (10) of the closure cap being connected to the ampoule (1) by means of an adhesive connection (11).

5. An ampoule according to claim 1 or 2, characterized in that the closure cap (3) is connected to a bottom ampoule support and in that the ampoule (1) co-operates with the closure cap (3) and the ampoule support (14).

6. An ampoule according to one or more of the preceding claims, characterized in that the closure cap (3) at least partially conically tapers at its outer side (4) into the direction of the ampoule (1).

7. An ampoule according to one or more of the preceding claims, characterized in that a sensor (10') is accommodated in the closure cap for measuring conditions in a recess (9) in wood closed by said closure cap (3).

8. An ampoule according to claims 1 to 7, characterized in that the closure cap (3) is provided on the outer side with clamping and sealing-promoting means (16, 17) preferably in the form of ribs (17) extending therearound.

9. An ampoule according to claims 1 to 8, characterized in that the ampoule retaining means (18) are present in the bore (6a).

10. An ampoule according to one or more of the preceding claims characterized in that the closure cap (3) is made of nylon material.

## Patentansprüche

1. Eine Holzschutzzusammensetzung enthaltende Ampulle, die mit einer Verschlußeinrichtung für eine Aussparung im Holz so verbunden ist, daß, wenn die Ampulle in die Aussparung eingeführt ist, die Ampulle zerbricht, wenn gegen die Verschlußeinrichtung zum Schliessen der Aussparung geschlagen wird, wodurch die Holzschutzzusammensetzung freigesetzt wird, dadurch gekennzeichnet, daß die Verschlußeinrichtung von einer Verschlußkappe (3) gebildet wird, die aus einem Kunststoffmaterial hergestellt ist.

2. Ampulle nach Anspruch 1, dadurch gekennzeichnet, daß der obere Teil der Ampulle (1) klemmend in einer Bohrung (6) in der Verschlußkappe (3) gehalten ist.

3. Ampulle nach Anspruch 1 oder 2, dadurch gekennzeichnet, daß der obere Teil der Ampulle (1) in einer Bohrung (6) in der Verschlußkappe (3) aufgenommen ist, die eine zylindrische Form hat oder sich konisch in die Richtung der Innenseite der Verschlußkappe (3) erweitert.

4. Ampulle nach den Ansprüchen 1 bis 3, dadurch gekennzeichnet, daß die Verschlußkappe (3) mit der Ampulle mittels eines Klebstoffes verbunden ist, wobei vorzugsweise eine oder mehrere vorstehende Lippen (10) der Verschlußkappe mit der Ampulle (1) mittels einer Haftmittelverbindung (11) verbunden sind.

5. Ampulle nach Anspruch 1 oder 2, dadurch gekennzeichnet, daß die Verschlußkappe (3) mit einer unteren Ampullenabstützung verbunden ist und daß die Ampulle (1) mit der Verschlußkappe (3) und der Ampullenabstützung (14) zusammenwirkt.

6. Ampulle nach einem oder mehreren der vorhergehenden Ansprüche, dadurch gekennzeichnet, daß die Verschlußkappe (3) sich wenigstens teilweise konisch an ihrer Außenseite (4) in die Richtung der Ampulle (1) verjüngt.

7. Ampulle nach einem oder mehreren der vorhergehenden Ansprüche, dadurch gekennzeichnet, daß in der Verschlußkappe zum Messen der Bedingungen in einer Aussparung (9) im Holz, die von der Verschlußkappe (3) verschlossen ist, ein Sensor (10') aufgenommen ist.

8. Ampulle nach den Ansprüchen 1 bis 7, dadurch gekennzeichnet, daß die Verschlußkappe (3) an der Außenseite mit das Klemmen und Abdichten begünstigenden Einrichtungen (16, 17), vorzugsweise in der Form von Rippen (17) versehen ist, die sich um sie herum erstrecken.

9. Ampulle nach den Ansprüchen 1 bis 8, dadurch gekennzeichnet, daß in der Bohrung (6a) Ampullenhalteeinrichtungen (18) vorhanden sind.

10. Ampulle nach einem oder mehreren der vorhergehenden Ansprüche, dadurch gekennzeichnet, daß die Verschlußkappe (3) aus Nylonmaterial hergestellt ist.

## Revendications

1. Ampoule contenant une composition de préservation du bois, ladite ampoule étant attachée à des moyens de fermeture d'un trou ménagé dans le bois de sorte que, lorsque ladite ampoule est insérée dans ledit trou, ladite ampoule se casse lorsqu'on frappe sur lesdits moyens de fermeture pour fermer ledit trou, ce qui libère ladite composition de préservation du bois, caractérisé en ce que lesdits moyens de fermeture sont constitués par une capsule de fermeture (3) fabriquée en matière plastique.

2. Ampoule suivant la revendication 1, caractérisée en ce que la partie supérieure de l'ampoule (1) est maintenue bloquée dans une cavitée (6) de la capsule de fermeture (3).

3. Ampoule suivant la revendication 1 ou 2, caractérisée en ce que la partie supérieure de l'ampoule (1) est reçue dans une cavité (6) de la capsule de fermeture (3), de forme cylindrique ou s'élargissant coniquement vers l'intérieur de la capsule de fermeture (3).

4. Ampoule suivant les revendications 1 à 3, caractérisée en ce que la capsule de fermeture (3) est reliée à l'ampoule au moyen d'un adhésif, de préférence une ou plusieurs lèvres en saillie (10) de la capsule de fermeture étant connectées à l'ampoule (1) par une liaison adhésive (11).

5. Ampoule suivant la revendication 1 ou 2, caractérisée en ce que la capsule de fermeture (3) est reliée à un support inférieur d'ampoule et en ce que l'ampoule (1) coopère avec la capsule de fermeture (3) et le support d'ampoule (14).

6. Ampoule suivant une ou plusieurs des revendications précédentes, caractérisée en ce que la capsule de fermeture (3) converge au moins partiellement coniquement, à sa face extérieure (4), dans la direction de l'ampoule (11).

7. Ampoule suivant une ou plusieurs des revendications précédentes, caractérisée en ce qu'un détecteur (10') est logé dans la capsule de fermeture, pour mesurer les conditions dans un trou (9) du bois, fermé par ladite capsule de fermeture (3).

8. Ampoule suivant les revendications 1 à 7, caractérisée en ce que la capsule de fermeture (3) comporte, sur la face extérieure, des moyens (16, 17) favorisant le blocage et l'étanchéité, de préférence sous la forme de dents (17) s'étendant autour de la capsule.

9. Ampoule suivant les revendications 1 à 8, caractérisée en ce que les moyens de retenue d'ampoule (18) sont prévus dans la cavité (6a).

10. Ampoule suivant une ou plusieurs des revendications précédentes, caractérisée en ce que la capsule de fermeture (3) est fabriquée en nylon.

*Fig:1.*

*Fig:2.*

*Fig:5.*

*Fig:3.*

*Fig:4.*

1